# EUROPÄISCHE PATENTSCHRIFT

(11) **EP 0 600 285 B1**
(45) Veröffentlichungstag und Bekanntmachung des Hinweises auf die Patenterteilung: **05.03.1997**
(21) Anmeldenummer: 93118352.9
(22) Anmeldetag: 12.11.1993
(51) Int. Cl.: B23P 19/00, B25B 23/10, E04D 15/04

(54) **Vorrichtung zum Einschrauben von Befestigungselementen**
Device for screwing on fastening elements
Dispositif pour visser des éléments de fixation

(30) Priorität: 03.12.1992 DE 4240606
(43) Veröffentlichungstag der Anmeldung: 08.06.1994
(73) Patentinhaber: HARDO- BEFESTIGUNGEN GMBH, D-59823 Arnsberg (DE)
(72) Erfinder: Kraft, Franz, Dipl.-Ing., D-59757 Arnsberg (DE); Kraft, Gottfried, Dipl.-Ing., D-59757 Arnsberg (DE)
(74) Vertreter: Fritz, Edmund Lothar, Dipl.-Chem.

(56) Entgegenhaltungen:
- EP-A- 0 338 554
- DE-A- 3 538 271
- US-A- 3 967 664
- US-A- 3 973 605
- US-A- 5 058 464
- US-A- 5 144 870

## Beschreibung

Die vorliegende Erfindung betrifft eine Vorrichtung zum Einschrauben von Befestigungselementen mit einer Zuführeinrichtung für die Befestigungselemente, mit einer absenkbaren Schraubeinheit und mit einer Haltevorrichtung für das Befestigungselement, die dieses vor dem Festschrauben zunächst festhält und anschließend freigibt.

Eine solche Vorrichtung gemäß Oberbegriff von Patenanspruch 1 ist aus US-A-3973605 bekannt.

Aus dem europäischen Patent EP 0 003 714 ist eine Vorrichtung der vorgenannten Art bekannt, die sich zum Einschrauben einteiliger Bohrschrauben eignet. Diese bekannte Vorrichtung eignet sich jedoch nicht für die Anbringung zweiteiliger Befestigungselemente, bestehend aus einem Halteteil mit Teller und einer Schraube, wie sie herkömmlicherweise für die Befestigung von Dämmplatten und Dachbahnen an einer Dachunterkonstruktion insbesondere bei Flachdächern verwendet werden. Zwar sind auch bereits Schraubautomaten für diese spezifischen Befestigungselemente bekannt, in die jedoch die aus Halteteil und Schraube vormontierten Befestigungselemente in der Regel einzeln eingelegt werden müssen, so daß diese Schraubautomaten keine ausreichend rationelle Anbringung dieser Befestigungselemente zulassen.

Die Aufgabe der vorliegenden Erfindung besteht somit darin, eine Vorrichtung der eingangs genannten Art zu schaffen, die sich zum Einschrauben der genannten zweiteiligen Befestigungselemente eignet und eine zügige aufeinanderfolgende Verarbeitung dieser Befestigungselemente ohne Unterbrechung ermöglicht.

Die Lösung dieser Aufgabe liefert eine erfindungsgemäße Vorrichtung zum Einschrauben von Befestigungselementen der eingangs genannten Art mit den Merkmalen des Anspruchs 1. Erfindungsgemäß wird in einer ersten Phase des Schraubvorgangs zunächst der Teller des Halteteils durch eine Klemmeinrichtung festgehalten, während gleichzeitig das Schraubwerkzeug die Schraube eindreht. In einer zweiten Phase des Schraubvorgangs gibt dann diese Klemmeinrichtung den Teller des Halteteils frei. Die Schraube kann dann bis auf ihre maximale Einschraubtiefe eingeschraubt werden, wodurch gleichzeitig das Halteteil befestigt wird.

Gemäß einer bevorzugten Weiterbildung der Erfindung umfaßt die Klemmeinrichtung ein mit der Schraubeinheit absenkbares Rohr, das in seiner untersten Stellung von oben her auf den Teller des Halteteils drückt. Weiter ist bevorzugt, daß die Klemmeinrichtung zwei Auflager umfaßt, auf denen der Teller des Halteteils in der ersten Phase des Schraubvorgangs mit der Unterseite aufliegt, wobei diese Auflager um eine vertikale Achse schwenkbar sind und in der zweiten Phase des Schraubvorgangs soweit gespreizt werden, daß sie den Teller des Halteteils nach unten hin freigeben. Der Teller des Halteteils wird also zwischen dem mit der Schraubeinheit absenkbaren Rohr und den Auflagern eingeklemmt. Das Schraubwerkzeug fährt innerhalb des mit der Schraubeinheit absenkbaren Rohres soweit nach unten, daß es den Schraubenkopf erreicht. Dabei können auch solche Befestigungselemente angebracht werden, bei denen der Kopf der Schraube an einer Widerlagerfläche in der Hülsenbohrung des Halteteils aufliegt und wesentlich tiefer liegt als der Teller des Halteteils, so daß der Schrauber in die Hülsenbohrung des Halteteils hineinfährt, um den Kopf der Schraube zu erreichen. Befestigungselemente dieser Art, die für die Befestigung von Dämmplatten an einer Dachunterkonstruktion verwendet werden, sind zum Beispiel in der DE-PS 26 17 911 beschrieben.

Gemäß einer bevorzugten Weiterbildung der Erfindung werden die Auflager, auf denen der Teller des Halteteils aufliegt, durch einen Winkel mit Keilflächen gespreizt, der am Aufnahmekörper für die Befestigungselemente vertikal verschiebbar geführt ist. Vorzugsweise steht dieser Winkel über den Aufnahmekörper hinaus nach unten vor und ist gegen den Druck einer am Aufnahmekörper festgelegten Rückstellfeder vertikal verschiebbar geführt, so daß bei auf einem Untergrund aufstehenden Aufnahmekörper sich bei Druck von oben her der Winkel nach oben verschiebt, die Auflager auseinanderspreizt und das Halteteil nach unten freigibt. Diese Freigabe des Halteteils erfolgt also erst in der zweiten Phase des Schraubvorgangs, nachdem die Schraube bereits ein Stück in den Untergrund eingeschraubt ist. Durch Rückstellfedern wird bewirkt, daß die Auflager sich nach Freigabe des Tellers des Halteteils in ihre Ausgangsposition zurückbewegen.

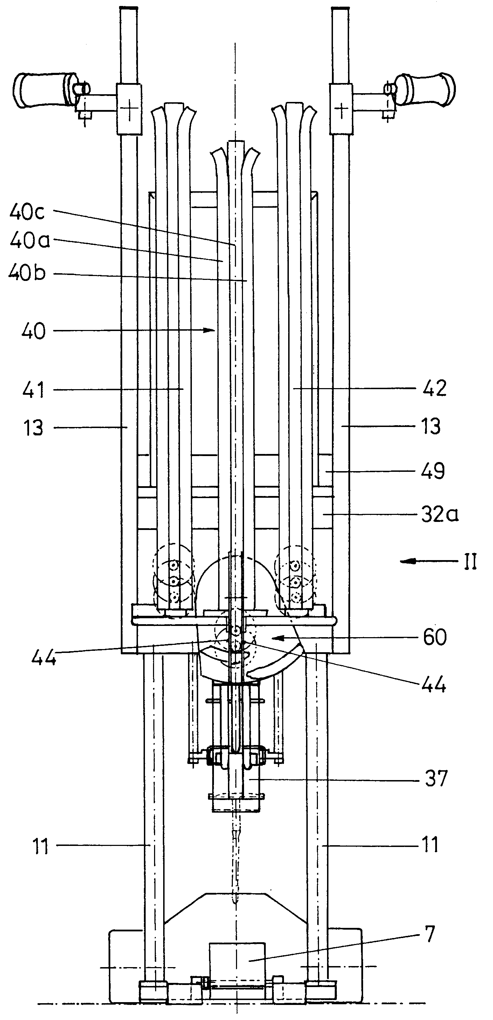

Nachfolgend wird die vorliegende Erfindung anhand eines Ausführungsbeispiels unter Bezugnahme auf die beiliegenden Zeichnungen näher beschrieben. Dabei zeigen
- Fig. 1: eine Ansicht einer erfindungsgemäßen Vorrichtung;

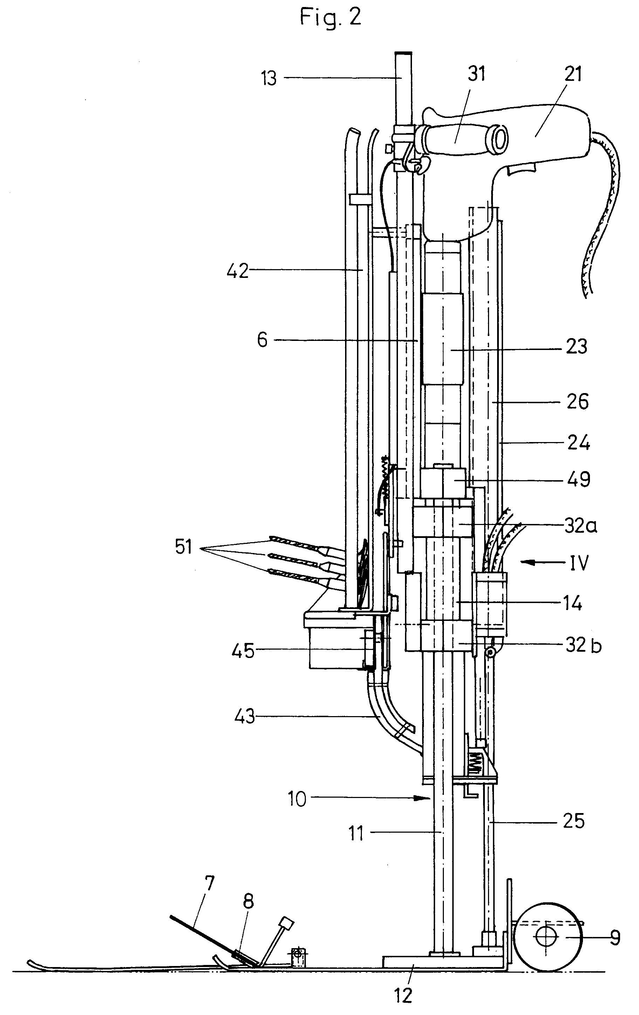

- Fig. 2: eine Seitenansicht der Vorrichtung gemäß Fig. 1;

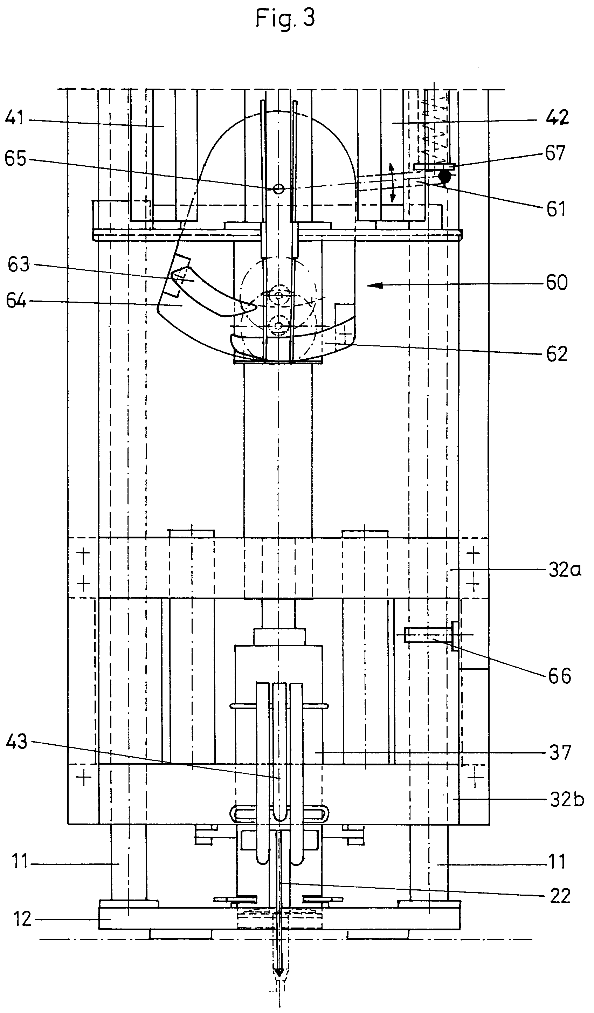

- Fig. 3: eine Detailansicht des unteren Bereichs der Vorrichtung;
- Fig. 4: eine rückwärtige Ansicht der erfindungsgemäßen Vorrichtung in der oberen Position der Schraubeinheit;
- Fig. 5: einen Schnitt entlang der Linie V-V;
- Fig. 6: eine vergrößerte Detailansicht des unteren Bereichs der Vorrichtung im teilweisen Schnitt;
- Fig. 7: eine Schnittansicht entlang der Linie VII-VII von Fig. 6;

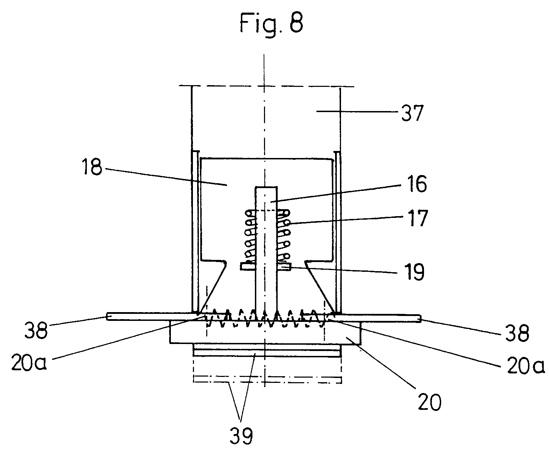

- Fig. 8: eine Ansicht in Richtung des Pfeils VIII von Fig. 6;
- Fig. 9: eine schematische Darstellung der Schraubeinheit in einer ersten Stellung;
- Fig. 10: eine schematische Darstellung der Schraubeinheit entsprechend Fig. 9 in einer zweiten Stellung;
- Fig. 11: eine schematische Darstellung der Schraubeinheit entsprechend Fig. 9 in einer dritten Stellung;
Es wird zunächt auf die Figuren 1 bis 5 Bezug genommen.

Der erfindungsgemäße Schraubautomat weist ein Gestell 10 auf mit zwei senkrechten Standrohren 11, die an ihrem unteren Ende auf einer Fußplatte 12 ruhen. Im Bereich der Fußplatte 12 sind Räder 9 anmontiert, so daß der Schraubautomat fahrbar ist. Außerdem kann in Höhe der Fußplatte 12 mit etwas Abstand von dieser an einer Halterung 8 ein Spiegel 7 angebracht sein, der in einem Winkel zur Horizontalen angeordnet ist und mittels dessen die Bedienungsperson den Schraubvorgang beobachten kann.

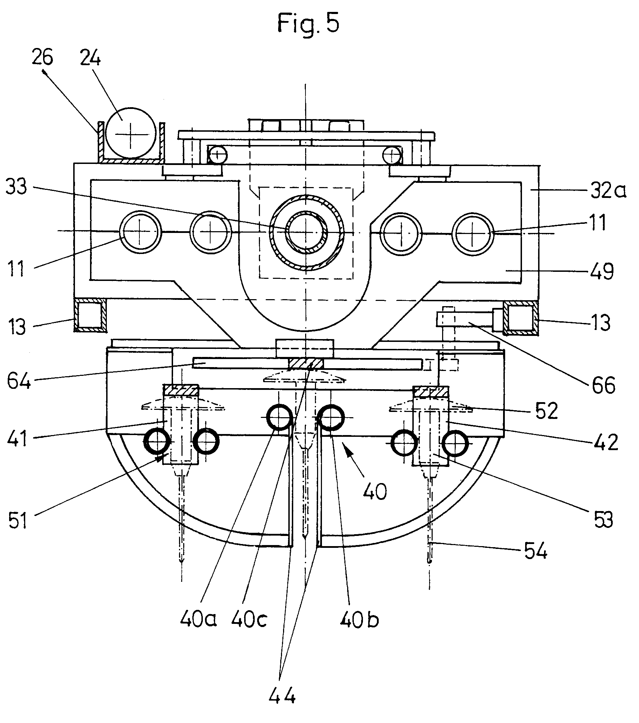

Auf den Standrohren 11 des Gestells ist die Schraubeinheit mit Schraubvorrichtung und Motor in vertikaler Richtung verschiebbar geführt. Diese vertikal verschiebbare Baueinheit weist zwei Führungsrohre 14 rechts und links auf, die bei der Absenkbewegung der Schraubeinheit auf den beiden Standrohren 11 des Gestells geführt sind. Fest mit dem Gestell verbunden ist eine Anschlagplatte 49, an der die beiden Führungsrohre 14 der absenkbaren Schraubeinheit in ihrer obersten Stellung anschlagen. Mit dieser Anschlagplatte 49 fest verbunden ist als weiterer fester Teil des Gestells ein oberer Gestellrahmen 6. Mit diesem oberen Gestellrahmen 6 wiederum fest verbunden sind drei Magazine, die die zu verschraubenden Befestigungselemente 51 aufnehmen und zwar ein mittleres Magazin 40 und zwei seitliche Magazine 41, 42. Die Befestigungselemente 51, die sich in dem mittleren Magazin befinden, werden sukzessive der Schraubeinheit zugeführt. Die beiden seitlichen Magazine nehmen weitere Befestigungselemente 51 auf, die anschließend in das mittlere Magazin 40 eingelegt werden können. Die Befestigungselemente 51 bilden in den Magazinen 40, 41, 42 eine vertikale Reihe und sind jeweils untereinander verkettet. Das mittlere Magazin 40 weist zwei seitliche rohrförmige Magazinführungen 40a, 40b auf, die den Schaft des Befestigungselements führen. Außerdem ist eine Führungsschiene 40c vorgesehen, an der der Teller 52 der Befestigungselemente 51 mit der Oberseite anliegt, so daß die Befestigungselemente durch diese Führungselemente des Magazins 40 so gehalten werden, daß der Schaft 53 des Tellers 52 und die Schraube 54 jeweils seitlich vom Magazin 40 wegragen und im wesentlichen eine horizontale Position einnehmen (siehe Fig. 5). Das Magazin 40 setzt sich in seinem unteren Bereich in einem gekrümmten Abschnitt 43 fort, der etwa eine 90°-Krümmung aufweist und über den das als nächstes zu verschraubende Befestigungselement der Schraubeinheit zugeführt wird. Unmittelbar oberhalb dieses gekrümmten Abschnitts 43 des Magazins ist eine Vereinzelungsvorrichtung 60 angeordnet, die jeweils ein einzelnes Befestigungselement 51 aus der Kette abtrennt. Im Bereich der Vereinzelungsvorrichtung sind an den beiden Magazinführungen 40a, 40b zwei Führungsplatten 44 angebracht, die eine bessere seitliche Führung des Schafts 53 und der Schraube 54 der Befestigungselemente beim Trennen aus der Kette gewährleisten. Rechtwinklig zu diesen Führungsplatten 44 und in Verlängerung der Magazinführungen 40a, 40b sind Führungsbänder 45 angeordnet, die unmittelbar an der Unterseite des Tellers 52 des untersten Befestigungselements anliegen, das aus der Kette abgetrennt wird.

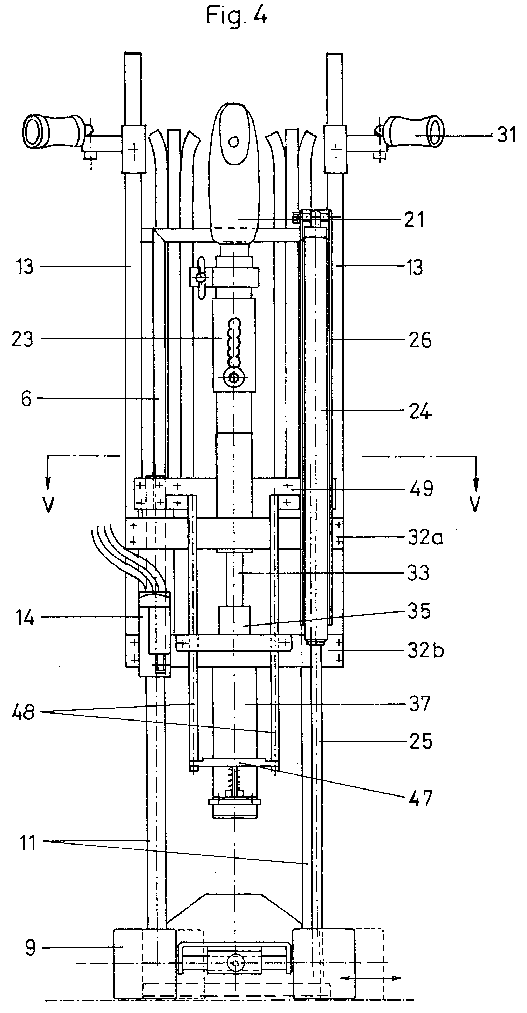

Nachfolgend wird die für den Schraubvorgang absenkbare Schraubeinheit des Schraubautomaten, die mit dieser verbundenen Teile und deren Funktion beschrieben. An zwei Rechteckrohren 13 der absenkbaren Schraubeinheit sind im oberen Bereich seitlich zwei Griffe 31 befestigt, so daß die Bedienungsperson durch Druck von oben her auf diese Griffe die Schraubeinheit absenken kann. Mit diesen Rechteckrohren 13 verbunden sind eine obere Führungsplatte 32a, die horizontal angeordnet ist und eine zu dieser parallele untere Führungsplatte 32b. Diese beiden Führungsplatten sind über vertikale Führungsrohre 14 miteinander verbunden (siehe Fig. 4). Diese Führungsrohre 14 sind bei der Absenkbewegung auf den Standrohren 11 axial verschiebbar geführt. An den beiden Führungsplatten 32a, 32b angebracht ist außerdem in vertikaler Anordnung eine Halterungsschiene 26, an der das obere Ende einer Gasdruckfeder 24 befestigt ist. Die Gasdruckfeder weist eine Kolbenstange 25 auf, die an ihrem unteren Ende auf der Fußplatte 12 des Gestells festgelegt ist. Beim Absenken der Schraubeinheit senkt sich die Gasdruckfeder 24 mit ab, wobei die an ihrem Ende festgelegte Kolbenstange 25 eingefahren wird. Somit erfolgt das Absenken der Schraubeinheit gegen die Kraft der Gasdruckfeder 24, während das Zurückführen der Schraubeinheit in die obere Ausgangsposition ohne Kraftaufwand durch die Gasdruckfeder 24 praktisch selbsttätig erfolgt.

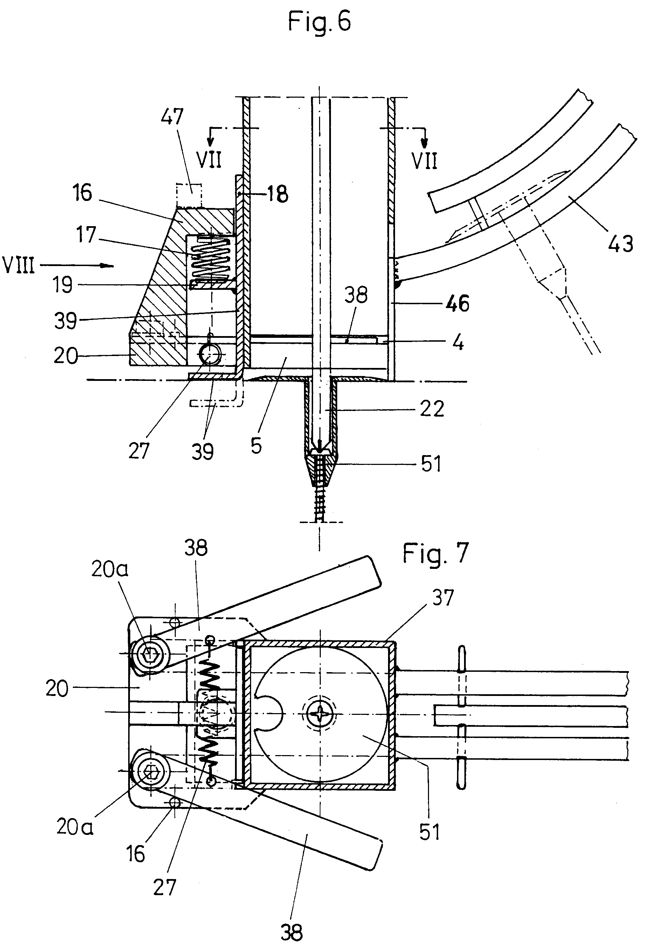

Die untere Führungsplatte 32b hat mittig eine rechteckige Ausnehmung 15 für den Aufnahmekörper 37. Dieser Aufnahmekörper weist in seinem unteren Abschnitt einen nach unten offenen rechteckigen Kanal 5 auf (siehe Fig. 6), der die anzubringenden Befestigungselemente 51 aufnimmt. Außen an diesem Aufnahmekörper 37 ist der untere gekrümmte Abschnitt 43 des oberhalb angeordneten Magazins angebracht, über den das unterste aus der Kette gelöste Befestigungselement 51 dem Kanal 5 des Aufnahmekörpers 37 zugeführt wird.

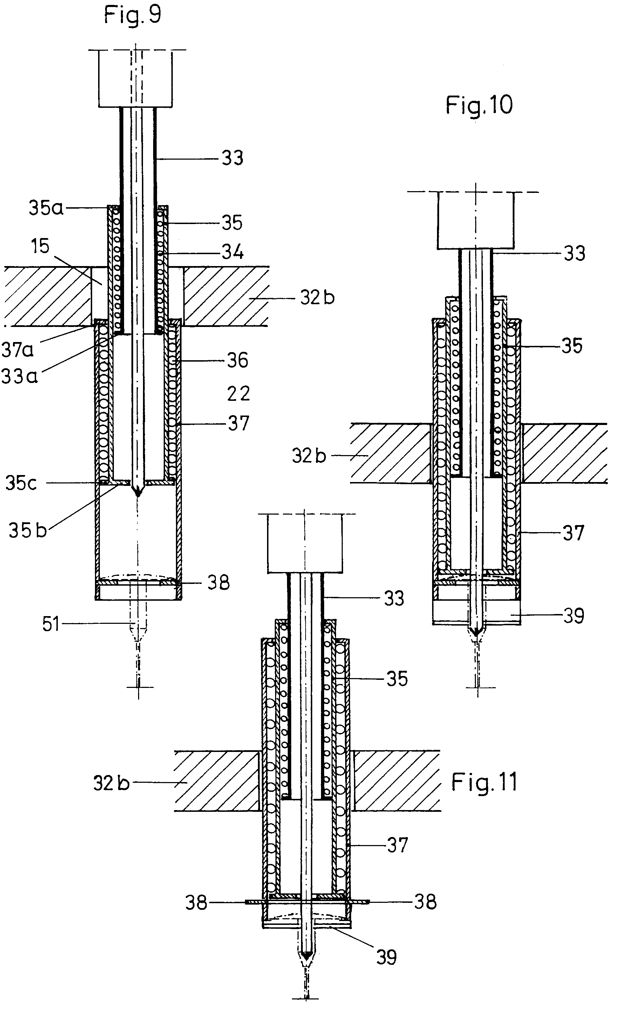

Nachfolgend wird außerdem auf die Figuren 9 bis 11 Bezug genommen. Die absenkbare Schraubeinheit umfaßt weiter einen Motor 21, der das Schraubwerkzeug 22 in Rotation versetzt. Der Motor 21 ist über eine Hülse 23 mit einem inneren Rohr 33 verbunden. Dieses innere Rohr 33 ist abgekröpft und weist unterhalb der Abkröpfung einen geringeren Durchmesser auf. Das innere Rohr 33 wird teleskopierend aufgenommen von einem Zwischenrohr 35, das wiederum teleskopierend aufgenommen wird von dem Aufnahmekörper 37 (siehe Fig. 4). In dem Ausführungsbeispiel sind inneres Rohr 33 und Zwischenrohr 35 Rundrohre und der Aufnahmekörper 37 hat einen rechteckigen Querschnitt. Koaxial in dem inneren Rohr aufgenommen ist das mit dem inneren Rohr absenkbare Schraubwerkzeug 22. Das innere Rohr 33, das Zwischenrohr 35 und der Aufnahmekörper 37 sind beim Absenken der Schraubeinheit teleskopartig ineinanderschiebbar. Dabei ist eine schwache Feder 34 vorgesehen, die sich in einer ersten Bewegungsphase beim Absenken der Schraubeinheit entspannt. Die schwache Feder 34 ist zwischen einem Absatz 35a des Zwischenrohrs 35 und einem Flansch 33a des inneren Rohrs 33 gehalten. Außerdem ist eine starke Feder 36 vorgesehen, die das Zwischenrohr 35 im unteren Abschnitt umgibt und am oberen Ende an einem Absatz 37a des Aufnahmekörpers 37 anliegt und am unteren Ende an einem nach außen weisenden Flansch 35c des Zwischenrohrs 35 anliegt. Am unteren Ende weist das Zwischenrohr 35 außerdem einen nach innen einspringenden Absatz 35b auf, während das innere Rohr 33 an seinem unteren Ende einen nach außen weisenden Flansch 33a aufweist. Durch die starke Feder 36 wird der Aufnahmekörper 37, der außen einen angeschweißten Anschlag 16 aufweist, nach oben gegen eine Querstange 47 als Widerlager gedrückt, die über vertikale Stangen 48 mit der Anschlagplatte 49 und somit mit dem festen Teil des Gestells verbunden ist (siehe Fig. 4 und Fig. 6).

In der ersten Bewegungsphase der Absenkbewegung (siehe Fig. 9) der Schraubeinheit entspannt sich zunächst die schwache Feder 34. Da dadurch der Federdruck an dem oberen Absatz 35a des Zwischenrohrs 35 nachläßt, entspannt sich auch die starke Feder 36 etwas und auch das Zwischenrohr 35 wird abgesenkt und in den Aufnahmekörper 37 verschoben. Wenn schließlich der Punkt erreicht ist, an dem der Absatz 35b am unteren Ende des Zwischenrohrs 35 auf den Teller 52 des Befestigungselements drückt (siehe Fig. 10), das inzwischen über den Magazinabschnitt 43 in den Aufnahmekörper 37 gelangt ist, wird bei der weiteren Absenkbewegung auch der Aufnahmekörper 37 mit nach unten genommen. Bei der Absenkbewegung der Schraubeinheit ist zunächst der Aufnahmekörper 37 in einer rechteckigen Ausnehmung 15 der unteren Führungsplatte 32b geführt. In der unteren Position des Zwischenrohrs 35 im Aufnahmekörper 37 ist der Teller des Befestigungselements zwischen dem Absatz 35b und einem Paar Auflager 38 gehalten, die sich am unteren Ende des Aufnahmekörpers befinden. Das Befestigungselement wird nun in Befestigungsposition gebracht und die Schraube 54 durch das Schraubwerkzeug 22 durch die Dachbahn zunächst so weit eingeschraubt, bis ein am Aufnahmekörper 37 gegen die Kraft der Feder 17 verschiebbarer Winkel 39 mit Keilflächen die um eine vertikale Schwenkachse 20a schwenkbar gelagerten Auflager 38 auseinanderspreizt (siehe Fig. 6 und 7). Durch diese Spreizbewegung der Auflager wird der Teller 52 des Befestigungselements freigegeben und die Schraube 54 kann bis zu ihrer maximalen Einschraubtiefe eingeschraubt werden (siehe Fig. 6 und 11). An dem Winkel 39 ist eine Führungsplatte 18 angebracht, die entlang des Aufnahmekörpers 37 vertikal verschiebbar geführt ist. Als Widerlager für die Rückstellfeder 17 dient zum einen oben der Anschlag 16 und zum anderen das fest an dem Winkel 39 angebrachte Widerlager 19. Die Spreizbewegung der Auflager 38, die auf einem U-Eisen 20 gelagert sind und in ihrer Ruheposition in schlitzförmige Ausnehmungen 4 des Aufnahmekörpers 37 eingreifen, erfolgt gegen die Kraft einer horizontal die Auflager 38 verbindenden Rückstellfeder 27.

## Patentansprüche

1. Vorrichtung zum Einschrauben von Befestigungselementen mit einer Zuführeinrichtung für die Befestigungselemente, mit einer absenkbaren Schraubeinheit und mit einer Haltevorrichtung für das Befestigungselement, die dieses vor dem Festschrauben zunächst festhält und anschließend freigibt, wobei das Befestigungselement zweiteilig ist und ein Halteteil (51) umfaßt und eine vom Halteteil aufgenommene Schraube (54) und wobei die Haltevorrichtung eine Klemmeinrichtung umfaßt, die einen Teller (52) des Halteteils in einer ersten Phase des Schraubvorgangs zunächst festhält, während das Schraubwerkzeug die Schraube (54) eindreht und daß in einer zweiten Phase des Schraubvorgangs die Klemmeinrichtung den Teller (52) des Befestigungselements nach unten hin freigibt, wobei die Klemmeinrichtung zwei Auflager (38) umfaßt, auf denen der Teller (52) des Halteteils in der ersten Phase des Schraubvorgangs mit der Unterseite aufliegt und wobei diese Auflager (38) in der zweiten Phase des Schraubvorgangs so weit gespreizt werden, daß sie den Teller des Halteteils nach unten hin freigeben,
dadurch gekennzeichnet, daß die Auflager (38) um eine vertikale Achse schwenkbar sind und die Spreizbewegung der Auflager (38) durch einen Winkel (39) veranlaßt wird, der am Aufnahmekörper (37) der Vorrichtung vertikal verschiebbar geführt ist, der Keilflächen aufweist, die die Auflager (38) spreizen, wenn der Winkel (39) sich nach oben bewegt
und daß der Winkel (39) über den Aufnahmekörper (37), der den Teller (52) des Halteteils aufnimmt, hinaus nach unten vorsteht und gegen den Druck einer am Aufnahmekörper (37) festgelegten Rückstellfeder (17) vertikal verschiebbar geführt ist.

2. Vorrichtung zum Einschrauben von Befestigungselementen nach Anspruch 1, dadurch gekennzeichnet, daß die Klemmeinrichtung ein mit der Schraubeinheit absenkbares Rohr (35) umfaßt, das in seiner untersten Stellung von oben her auf den Teller (52) des Halteteils drückt.

3. Vorrichtung zum Einschrauben von Befestigungselementen nach Anspruch 1 oder 2, dadurch gekennzeichnet, daß die Auflager (38) gegen die Kraft einer Rückstellfeder (27) gespreizt werden und nach Freigabe des Tellers (52) des Halteteils sich in ihre Ausgangsposition zurückbewegen.

4. Vorrichtung zum Einschrauben von Befestigungselementen nach einem der Ansprüche 1 bis 3, dadurch gekennzeichnet, daß solche Befestigungselemente eingeschraubt werden, bei denen der Kopf der Schraube (54) an einer Widerlagerfläche in der Hülsenbohrung des Halteteils aufliegt und wesentlich tiefer liegt als der Teller (52) des Halteteils, so daß der Schrauber (22) in die Hülsenbohrung des Halteteils hineinfährt, um den Kopf der Schraube (54) zu erreichen.

## Claims

1. Device for screwing on fastening elements with a feed device for the fastening elements, with a screwing unit able to be lowered and with a holding device for the fastening element which holds the fastening element before screwing on and then releases it, the fastening element being made of two pieces and comprising a holding part (51) and a screw (54) accommodated in the holding part, the holding device further comprising a clamping device which locks a plate (52) of the holding part in a first stage of the screwing operation while the screwing tool is turning in the screw (54), and, in a second stage of the screwing operation, the clamping device releases the plate (52) of the fastening element downwardly, the clamping device comprising two supports (38) on which the plate (52) of the holding part rests with its lower side in the first stage of the screwing operation, these supports (38) being spreaded in the second stage of the screwing operation to such an extent that they release the plate of the holding part downwardly,
characterised in that the supports (38) are pivotable about a vertical axis and the spreading movement of the supports (38) is caused by an angle (39) which is guided at the accommodation (37) of the device so as to be shiftable in the vertical direction, said angle further comprises wedge surfaces which spread the supports (38) when the angle (39) is moving upwardly,
and that the angle (39) projects downwardly beyond the accommodation (37) which accommodates the plate (52) of the holding part, and is guided in a vertically shiftable manner against the pressure of a reset spring (17) fastened at the accommodation (37).

2. Device for screwing on fastening elements as claimed in claim 1, characterised in that the clamping device comprises a pipe (35) capable of being lowered together with the screwing unit which presses in its lowermost position from above onto the plate (52) of the holding part.

3. Device for screwing on fastening elements as claimed in claim 1 or 2, characterised in that the supports (38) are spreaded against the force of a reset spring (27) and move back into their starting position after the release of the plate (52) of the holding part.

4. Device for screwing on fastening elements as claimed in any one of claims 1 to 3, characterised in that such fastening elements are screwed in in which the head of the screw (54) is supported at an abutment in the socket bore of the holding part and is positioned substantially lower as the plate (52) of the holding part so that the screwer (22) penetrates the socket bore of the holding part in order to reach the head of the screw (54).

## Revendications

1. Dispositif pour visser des éléments de fixation, avec un dispositif d'alimentation pour les éléments de fixation, avec une unité de vissage qui peut être abaissée et avec un dispositif de support pour l'élément de fixation, dispositif de support qui pour commencer retient l'élément de fixation avant le vissage et qui le libère ensuite, l'élément de fixation étant constitué de deux parties et comprenant un élément de support (51) et une vis (54) reçue par l'élément de support, le dispositif de support comprenant un dispositif de serrage lequel lors d'une première phase de l'opération de vissage commence par retenir un plateau (52) de l'élément de support, pendant que l'outil de vissage commence le vissage de la vis (54), tandis qu'au cours d'une deuxième phase de l'opération de vissage, le dispositif de serrage libère vers le dessous le plateau (52) le dispositif de serrage comprenant deux appuis (38) sur lesquels se pose par sa face inférieure le plateau (52) du dispositif de support lors de la première phase de l'opération de vissage, tandis que lors de la deuxième phase de l'opération de vissage ces appuis (38) sont écartés l'un de l'autre à un degré tel qu'ils libèrent en direction du bas le plateau de l'élément de support,
caractérisé
en ce que les appuis (38) peuvent pivoter autour d'un axe vertical et en ce que le mouvement d'écartement des appuis (38) est amorcé par une équerre (39) guidée à mobilité verticale sur le dispositif de réception (37) de l'installation, équerre qui présente des surfaces en coin qui écartent l'un de l'autre les appuis (38), lorsque l'équerre (39) se déplace vers le haut,
et en ce que l'équerre (39) fait protubérance vers le dessous au-delà de l'élément de réception (37), qui reçoit le plateau (52) de l'élément de support, et est guidé à mobilité verticale à l'encontre de l'action d'un ressort de rappel (17) fixé à l'élément de réception (37).

2. Dispositif pour visser des éléments de fixation suivant la revendication 1, caractérisé en ce que le dispositif de serrage comprend un tube (35) pouvant être descendu conjointement avec l'unité de vissage, tube (35) qui dans sa position la plus basse s'appuie par le haut sur le plateau (52).

3. Dispositif pour visser des éléments de fixation suivant la revendication 1 ou la revendication 2, caractérisé en ce que les appuis (38) sont écartés l'un de l'autre à l'encontre de l'action exercée par un ressort de rappel (27) et retournent à leur position d'origine après que le plateau (52) de l'élément de support ait été libéré.

4. Dispositif pour visser des éléments de fixation avec un dispositif suivant l'une quelconque des revendications de 1 à 3, caractérisé en ce que sont vissés des éléments de fixation dont la tête de la vis (54) s'applique sur une surface d'appui dans la forure en douille de l'élément de support et est située à un niveau sensiblement plus bas que le plateau (52) de l'élément de support, de telle sorte que le tourne-vis (22) est introduit dans la forure en douille de l'élément de support pour atteindre la tête de la vis (54).
